Europäisches Patentamt

**European Patent Office**

Office européen des brevets

(11) Publication number: **0 028 463**
**A1**

(12) **EUROPEAN PATENT APPLICATION**

(21) Application number: **80303528.6**

(22) Date of filing: **08.10.80**

(51) Int. Cl.³: **C 12 M 1/10**
**G 01 N 1/18**

(30) Priority: **11.10.79 US 83720**
**11.10.79 US 84029**

(43) Date of publication of application:
**13.05.81 Bulletin 81/19**

(84) Designated Contracting States:
**BE DE FR GB**

(71) Applicant: **AMERICAN HOME PRODUCTS
CORPORATION
685, Third Avenue
New York, New York 10017(US)**

(72) Inventor: **Eriquez, Louis Anthony
4, Arizona Place
Huntington Station New York(US)**

(72) Inventor: **Hossom, Miles Gerald
3031, Powder Mill Circle
Bethlehem Pennsylvania(US)**

(74) Representative: **Wileman, David Francis et al,
c/o John Wyeth and Brother Limited Huntercombe Lane
South
Taplow Maidenhead Berkshire SL6 OPH(GB)**

(54) Method for measuring and transferring predetermined volumes of liquid samples particularly useful in microbiological testing and a device for microbiological testing.

(57) This invention relates to improvements in the operation and functioning of devices for measuring and transferring predetermined volumes of a liquid sample and possibly subjecting said volumes to analytical operations such as microbiological testing. The method of this invention improves fluid flow and/or renders bacterial growth more homogeneous by adding polyvinylpyrrolidone (PVP) to the liquid sample or by having PVP in the volume subjected to microbiological testing. A device containing PVP useful for carrying out microbiological testing is also disclosed.

Fig.1.

EP 0 028 463 A1

The present invention relates to improvements in the operation and functioning of devices for measuring predetermined volumes of a liquid sample and possibly subjecting said volumes to analytical operations; and to an improved device. Such devices are described in United States Letters Patent Nos. 3,986,534 and 4,070,248 and UK Patent Specification No. 1474643, the disclosures of which are incorporated herein by reference.

United States Letters Patent Nos. 3,986,534 and 4,070,248 and UK Patent Specification No. 1,474,643 describe devices comprising an axially vertical casing having an axis which is kept vertical in operation, an axial upwardly open chamber arranged to receive said liquid sample and a plurality of test cells having transparent walls distributed around said chamber, and a plurality of pockets each having an end communicating with said chamber and located to be filled by liquid flowing from said chamber and another end communicating with a respective one of said cells via a capillary constriction, and closure means arranged to separate said chamber from said pockets and to retain said volumes in said pockets when inserted into said casing.

The term "capillary constriction" is used to mean a passage which is of such size as to prevent the sample liquid from flowing therethrough when subjected to a hydrostatic pressure corresponding to a liquid head of a few centimetres. On the other hand, the constriction should have dimensions such that the sample liquid can be spun out into the cells when the liquid is subjected to an acceleration exceeding about 10 times the gravitational acceleration. The flow path of the liquid through the constriction should be such that the centrifugal acceleration, when the device is rotated, has a component which tends to drive the liquid out of the pockets. The flow path will typically be approximately radial with

- 3 -

respect to the axis of the device.

Advantageously, each pocket is laterally bounded by vertical walls which are substantially parallel and radially directed and are at a distance not exceeding a few millimetres (1 to 5 mm in most cases). The top wall of each pocket can be flat, horizontal or slightly sloping, to prevent the capture of bubbles which would result in inaccuracies of measurement. The lower wall is typically concave towards the top, over most of its extent at least.

The closure means may be cup-shaped and formed to be suitable as a vessel to supply the sample to be divided into fractions. The side wall of the closure means may be shaped to co-operate with the lateral wall of the cylindrical central chamber, either by forcefitting or by a threaded connection. The contents of the pockets can be isolated by forcing the edge of the cup wall against the lower wall of the chamber. The terminal edge of the side wall can be convex or knife-edged and can engage in a circular groove at the bottom of the chamber for sealingness. Alternatively, the side wall of the chamber can be provided with access apertures to the pockets, in which case the side wall of the cup may also be provided with apertures adapted to be placed opposite the access apertures, depending on the angular position given to the cup.

Preferably each cell has a venting opening in the upper portion thereof. Conveniently the cells are disposed at equal distances from the axis and are connected to pockets having identical volumes.

- 4 -

The device has numerous applications, more particularly in medicine and biochemistry and, more generally, when the volumes have to be analysed using different reagents.  The reagents, in dried or lyophilised form if necessary, can be placed beforehand in the cells. In the case, for example, where antibiograms by dilution in a liquid medium are to be obtained, the reagent may be a culture medium containing the antibiotic whose effect is to be measured, and a colour indicator, e.g. a pH indicator.  A similar approach may be used for identifying strains of micro-organisms.

For example, similar test reagents to those described in U.S. Patent 3,936,356 the disclosure of which is incorporated herein by references, can be employed.

Since the cells have transparent walls, the analytical results can be determined visually or, more accurately, using a photocolorimeter which can operate automatically.  Photocolorimeters of known type can be used whenever a positive reaction is shown by a colour change in the body of liquid in the cell.  If the cells have parallel surfaces, it is simply necessary to convey each cell in turn between a suitable source of light (for instance yellow light at 380 nm wave length in the case of antibiograms) and a suitable detector, which is disposed behind an optical filter if necessary. If a positive reaction is shown only by turbidity, the latter can be detected by absorption of light at a longer wavelength, e.g. approx 650nm.

Also see the system described and claimed in U.S. Serial No. 40,524 filed May 21, 1979 in the names of Thomas L, Kraft, Howard A. Vick and Miles Gerald Hossom.

- 5 -

A number of disadvantages have been found in using such known devices. For example fluid flow during measurement of predetermined volumes of liquid sample is often uneven such that subsequent analytical operations are incapable of being performed. Also when bacterial growth of some species is to be monitored in the predetermined volume of the liquid sample, growth of the bacteria tends to concentrate near surfaces and hence accurate automated photocolorimeter reading is difficult.

We have now surprisingly found that such disadvantages can be improved by the use of polyvinylpyrrolidone (PVP). Thus not only can fluid flow be significantly and substantially improved by having a small amount of PVP in the liquid sample, but also growth of the bacteria can be rendered more homogeneous in the growth medium by supplementing the medium with a small amount of PVP.

Accordingly this invention provides a method for the measuring and transferring predetermined volumes of a liquid sample, using a rotatable device comprising a member defining an upwardly open central chamber concentric with the rotational axis of the device, a plurality of radial pockets communicating at inner ends thereof with the central chamber and located to be filled by gravity flow of liquid from the chamber into each of the pockets, the outer ends of each of the pockets communicating by means of a capillary constriction with each of a plurality of test cells formed in the rotatable device; comprising the steps of

filling the central chamber with the liquid sample until the pockets contain the predetermined volumes, inserting a closure means to isolate the predetermined volumes of liquid in the pockets from the balance of

- 6 -

liquid in the chamber,

rotating the device about the rotational axis to create
centrifugal forces sufficient to cause transfer of the
volumes from the pockets into the test cells through the
capillary constrictions,

characterised in that the liquid sample comprises from
about 0.3 to 3.0% weight by volume of polyvinylpyrrolidone
having an average molecular weight greater than about
40,000 and less than about 400,000.

This method may also be used in microbiological testing
when some at least of the cells contain a bacteria
growing medium and either an antibiotic in lyophilised
or other dried form or a growth indicator in lyophilised
or other dried form;  the liquid sample contains bacteria
and as an additional step after rotation the bacteria
are incubated so that the susceptibility of the bacteria
to antibiotic can be tested or the bacteria can be
identified.

    This invention also provides a method for measuring
and transferring predetermined volumes of a liquid sample
using a rotatable device comprising a member defining an
upwardly open central chamber concentric with the
rotational axis of the device, a plurality of radial
pockets having predetermined volume communicating at the
inner ends thereof with the central
chamber and located to be filled by gravity flow of liquid
from the chamber into each of the pockets, the outer ends
of each of the pockets communicating by means of a capillary
restriction with each of a plurality of test cells formed
in the rotatable device, some at least of the cells
containing a bacteria growth medium and
(i) an antibiotic in lyophilised or other or other dried
form, or
(ii) an indicator in lyophilised or other dried form;
comprising the steps of:

filling the central chamber with the liquid sample until the pockets contain the predetermined volumes of liquid, inserting a closure means to isolate the predetermined volumes of liquid in the pockets from the balance of liquid in the chamber,

rotating the device about the rotational axis to create centrifugal forces sufficient to cause transfer of the volumes from the pockets into the test cells, through the capillary constrictions,

incubating the bacteria for a predetermined time period and optically determining the growth of bacteria in each cell to test susceptibility of bacteria to antibiotic, or to optically determine the chemical change produced by the bacteria,

characterised in that the bacteria in said liquid sample in said cells is incubated in the presence of from about 0.3 to about 3.0% weight by volume of polyvinylpyrrolidone having an average molecular weight greater than about 40,000 and less than about 400,000.

Preferably the average molecular weight of the PVP used in this invention is about 360,000. Preferably the concentration in the liquid sample is 1%. Rendering the bacterial growth more homogenous throughout the growth medium is conducive to more accurate photocolorimeter determinations. The polyvinylpyrrolidone can be added to the test cells in various ways. For example, it can be added to the cell with the growth medium, with the growth indicator, with the antibiotic or it can be added separately to the cell prior to joining together bottom plate 18 and top plate 19 or with the liquid sample to be tested and introduced through central chamber and the pockets 13.

The amount of polyvinylpyrrolidone added to the cell is an amount sufficient to provide a solution in the cell, when the liquid to be tested is present in the cell, containing about 0.3 to about 3.0%, preferably about 1%, weight by volume of polyvinylpyrrolidone having an average molecular weight greater than about 40,000 and less than about 400,000 preferably about 360,000.

Polyvinylpyrrolidone (PVP) as a well known commercial product produced commercially as a series of 6 products having mean molecular weights ranging from about 10,000 to 700,000. Generally available commercial grades have average molecular weights in the range of 10,000 to 360,000, for example, General Aniline and Film Corporation (GAF) markets at least four viscosity grades available as K-15, K-30, K-60, and K-90 which have average molecular weights of about 10,000, 40,000, 160,000 and 360,000, respectively.

K-values are derived from viscosity measurements and calculated according to Fikentscher's formula (Kline, G.M. Modern Plastics 137 No. 1945):

$$\frac{\log \eta \, rel}{c} = \frac{75K_o^2 + K_o}{1 + 1.5K_o c}$$

$K = 1000K_o$

where $c$ = concentration in g/100ml solution

$\eta \, rel$ = viscosity of solution compared with solvent The molecular weight of PVP samples has been determined by osmometry, in the ultracentrifuge, by lightscattering measurements, thermodiffusion methods, sedimentation constants, turbidity titrations, and viscosity techniques.

- 9 -

The particular fraction of PVP useful in the present invention is that fraction having an average molecular weight greater than about 40,000 and less than about 400,000 preferably an average molecular weight of about 360,000. Particularly useful is viscosity grade K-90 marketed by GAF having an average molecular weight of about 360,000. The manufacture of this viscosity grade is disclosed in U.S. Patent Nos. 2,265,450 and 2,335,454 herein incorporated by reference. A similar commercial product is available from BASF-Wyandotte.

This invention also provides a device for carrying out the method of this invention involving microbiological testing characterised in that the cells contain polyvinylpyrrolidone preferably having a molecular weight greater than about 40,000 and less than about 400,000, most preferably about 360,000.

The invention will be better understood from the following description of embodiments thereof, which are given by way of non-limitative examples.

Figure 1 is a simplified elevation view of a device, partly in cross section along a vertical place, with the closure means removed.

Figure 2 shows the device of Figure 1 after fractions of a sample have been transferred into analytical cells, the device being disposed on a centrifuge used for spinning the fractions into the cells of the pockets.

Figure 3 is similar to Figure 1 and shows a modified embodiment;

Figure 4 is a view on an enlarged scale showing a cell and the accompanying components of a device according to a modification of the device in Figure 1, before assembly.

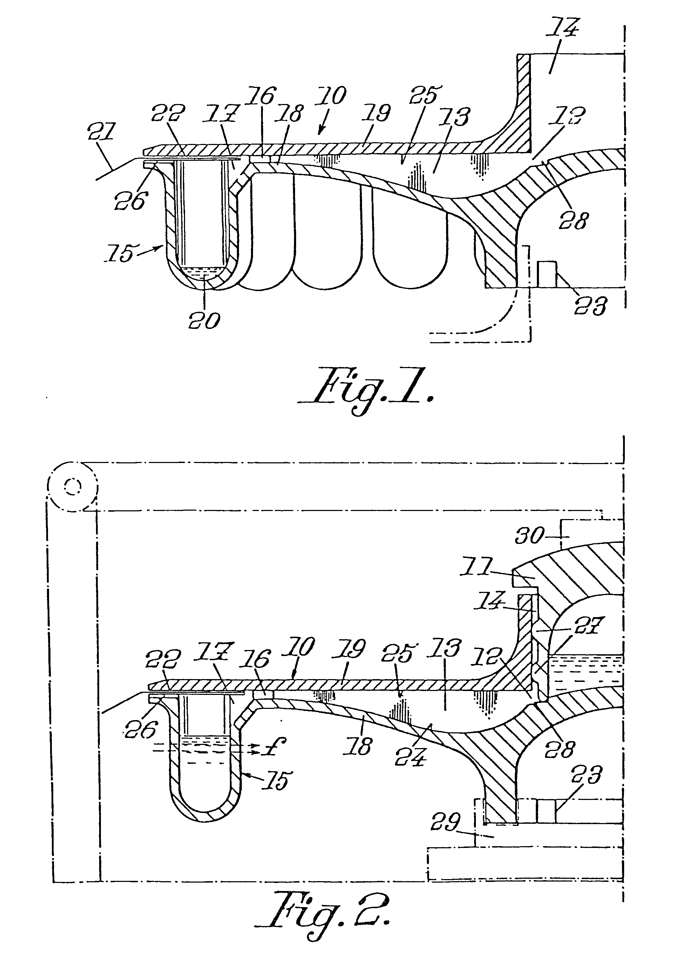

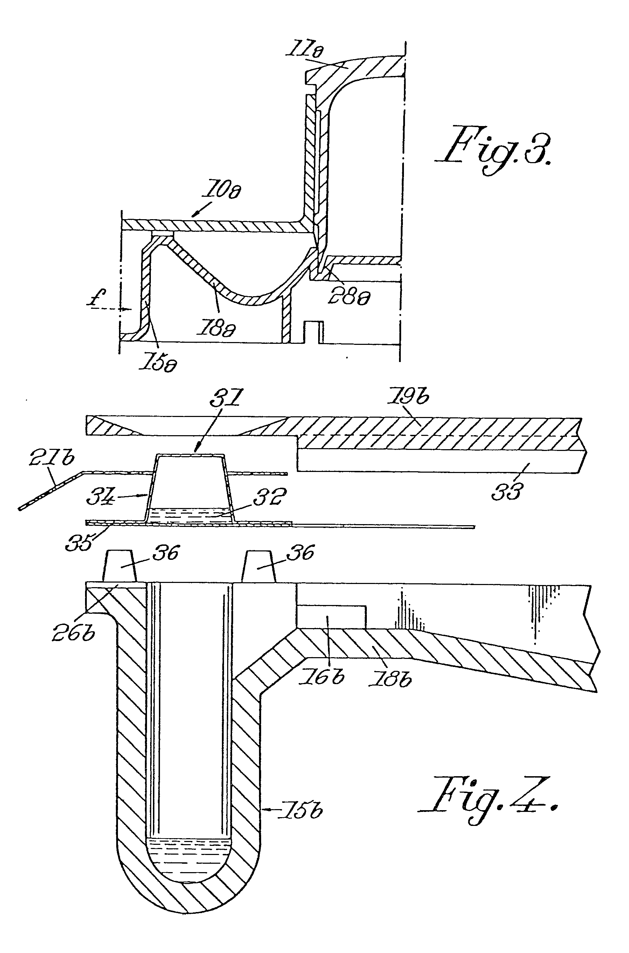

Referring to the drawings, Figures 1 and 2 show diagrammatic representation of a device for obtaining fractions of a liquid sample, the device comprises a casing 10, consisting of several assembled components and removable closure means 11. The casing has a substantial rotational symmetry around an axis which is located vertically during use. The casing contains a central chamber 14 which opens upwardly and has a capacity varying from a few millilitres to a few tens of millilitres. The chamber is connected via lateral apertures 12 to a number of pockets 13 formed in the casing, regularly distributed around the central chamber and extending substantially radially. Each pocket is associated with an analysis cell 15 in the form of a test-tube having a transparent side wall. A constriction 16 is provided between each pocket 13 and the corresponding cell 15, the transverse dimensions of each constriction being such that it is capillary for the liquid to be divided into fractions (of course the liquids can have greatly variable surface tensions). The connecting passage 17 provided between each constriction 16 and the corresponding cell 15 is flared so as to prevent the liquid in pockets 13 from seeping along the wall to cells 15.

The casing 10 in Figure 1 comprises a bottom plate 18 and a top plate 19 force-fit into one another. The bottom plate 18 forms the bottom of chamber 14, and the bottoms and side walls of pockets 13 and cells 15 (24 cells being provided in the embodiment illustrated).

All of plate 18 is advantageously made of a plastic material which is transparent over a wide range of optical frequencies, which is rigid and which can be shaped by moulding. It can be made of crystal polystyrene, which withstands most conventional chemical reagents. The moldable plastic material sold under the DIACON Trade Mark and comprising methylmethacrylate and polystyrene may also be used.

The top plate 19 forms the side wall of chamber 14, the top walls of pockets 19 and the covers of cells 15. It can be made of the same material as the bottom plate or of a material which is more flexible than that of the bottom plate, so as to facilitate force fitting. It may be made inter alia of polypropylene or polyethylene. The plates may be shaped so that the casings can be stored by stacking, as indicated by the chain-dotted lines in Figure 1.

The casing shown in Figure 1 contains a layer of reagent 20 at the bottom of each cell 15. In the case of a device for obtaining antibiograms, the reagent may be e.g. a culture medium containing a specific antibiotic and a colour indicator, e.g. a pH indicator.

Advantageously, a label 21 is disposed opposite each cell so as to identify each antibiotic. All the labels can be carried by a single flexible ring 22 secured between plates 18 and 19. In addition, an identification notch 23 can be formed in the lower skirt of plate 18 so that it can be mounted in only one angular position on a data-reading device.

A narrow slot 26 connects each cell to atmosphere, so that air can escape from it and the liquid flow into it.

Advantageously, each pocket is flat in the vertical direction; to this end, the bottom plate has slits having vertical, parallel and substantially radial walls and spaced apart by 1 to 5 mm. The bottom 24 of each slot curves smoothly and is advantageously concave along its first part from the central chamber. The top wall 25 of the pockets may be flat and horizontal or slightly conical downwards or upwards, so as not to trap bubbles. In the resulting casing, all the pockets can have the same volume. Preferably, the two plates are not secured by gluing at the constrictions, since drops of glue may block the constrictions or reduce their cross-section.

The device also comprises a closure means 11 (Figure 2) which can be made of moulded material, e.g. the same material as plate 19. In the embodiment shown in Figure 2, the side wall of the closure means 11 has beads 27 which are forced into the side wall of the cell, so that when the closure member has been completely pressed down it is retained in position. The terminal edge of the side wall of means 11 is rounded and bears against the bottom of a groove 28 formed at the bottom of the chamber so as to separate the interior thereof from pockets 13.

Closure member 11, which is cup-shaped, can be given a sufficient capacity for use as a storage vessel for containing the liquid sample and transferring it to the casing.

A way of operating the device according to the invention will now be described, in the case where antibio-grams are prepared.

The closure means 11 shown in Figure 2 has a side wall with a rounded terminal edge. In the modified embodiment illustrated in Figure 3, on the other hand, closure means 11a is a cup having a knifeblade terminal edge which engages in a correspondingly shaped groove 28a formed in the bottom plate 18a. For increasing the surface traversed by the light for colorimetry, the cells 15a are typically located adjacent each other, without any gap between successive cells, and of substantially rectangular horizontal cross section.

The device can be used inter alia to prepare a wide variety of antibiograms from a small-volume sample, each pocket usually having a capacity less than 100 microlitres and each circular row being easily capable of containing 36 cells with an overall diameter of 8cm. The cell can contain antibiotics at different concentrations and different combinations of antibiotics. A plurality of devices can be provided and used in succession, a first device being used to determine the antibiotics towards which the strain is active or resistant, and a second device (whose cells contain different concentrations of the same antibiotics) being used to determine the minimum inhibiting concentration (MIC) of the active antibiotics.

Referring to Figure 4 (where, for simplicity, like elements bear like references to Figure 1) show a modified embodiment which differs mainly in that each cell 15b (or at least some of the cells) is provided with a compartment 31 containing a reagent 32. Referring to Figure 4, there is shown a bottom plate 18b and a top plate 19b before assembly. Plate 19b has ribs 33 which are force-fitted in correspondingly-shaped grooves leaving a constricted passage 16b, the width of which usually varies from 1/10th to a few tenths of a millimetre.

Compartments 31 are formed in capsules 34 made of plastic which is deformable but highly resistant to tearing. Capsules 34 are secured, e.g. by gluing, to a thin plastics or metal strip 35 which tears when pressure is exerted on the top wall of a capsule. Strip 35 and the capsules are held in position by stubs 36 which are distributed around each cell 15b and engage in corresponding apertures formed in strip 35 and the capsule strip. The stubs may also engage in the apertures of a strip 21b bearing labels.

The device shown in Figure 4 is of particular interest for chemical measurements, more particularly for detecting abnormal proportions of constituents in organic liquids such as blood or urine, for detecting enzymes or the like. In such cases it is frequently necessary to use two reagents which cannot be stored together. One is then placed in cell 15b and the other in compartment 31. It may also be necessary to add an additional reagent for detection: it is again stored in compartment 31. The additional reagent may e.g. be necessary to inhibit or indicate the reaction; it may be an accelerator to be introduced at the last moment; it may be a light density solvent for collecting coloured products just under the liquid free level, etc.

Many other modified embodiments of expendable devices according to the invention are possible. When used for medical purpose, the device is used once only and then destroyed. In an embodiment for chemical use, all cells 15 may contain a same reagent and the closure means having a single closable lateral aperture and a lower end wall. The closure means has been inserted into the casing so that its aperture registers with an aperture in the casing. Operation is then the same as before, the pocket being used as a pipette for storing a predetermined volume and transferring it to the corresponding cell. Next, the closure means is removed and replaced by a second closure means which is positioned opposite another aperture. In this manner, the same reaction can be performed on samples coming from different patients, e.g. for quantitative analysis of urea. Each closure means may have not one but two or three apertures, which are located in coincidence with pockets corresponding to cells containing two or three different reagents, e.g. for determining urea and cholesterol.

- 15 -

Finally, the casing may comprise cells disposed in a number of concentric rows, in which case of course the pockets connecting the cells in the outer row are connected thereto by ducts comprising non-radial portions.

A liquid sample, is prepared, comprising a dilute solution of bacteria, the sensitivity of which is to be determined against various antibiotics in the device. The solution into which the bacteria are transferred is a 1% weight by volume solution of polyvinylpyrrolidone (average molecular weight of 360,000, Aldrich Chemical Company Catalog No. 85-647-9) in water, i.e. 60 grams of PVP in 6 liters of water.

The volume of sample need not be precisely determined, provided that it is sufficient to fill all the pockets. The sample is poured into the central chamber 14, from where it flows into the pockets, which it fills up to the constrictions 16. Next, the closure member 11 is positioned so as to separate the contents of pockets 13 (which form a corresponding number of pipettes) from the liquid remaining in chamber 14. In the device illustrated in Figure 1 when the closure means is in position, the dilute solution of bacteria cannot contaminate the environment. Furthermore, if the closure means is used as a conveying cup, there is no additional contaminated vessel to be discarded and destroyed.

Next, the device is placed on the rotating part of a centrifuge, which can be manual or driven by a motor at a given speed of rotation. Figure 2 diagrammatically shows the device on top of the rotating part 19 of a centrifuge, the outline of which is shown by broken lines. The centrifuge frame has an arm bearing on closure member 11, the arm being sufficiently heavy to prevent the device from moving during centrifuging. A conventional centrifuge can be used. The electric motor is energized by a timing device so that the centrifuging conditions are reproducible.

- 16 -

If the device has a diameter of approx. 10cm, a speed of a few tens of r.p.m. is sufficient.

After the contents of each pocket 13 has been transferred into the corresponding cell 15, the device is placed in an incubator. It is shaped so that it can easily be placed horizontally. After a certain period, usually about one day, the data are read, either visually or, advantageously on an automatic photocolorimeter which may be conventional and comprises a light source (e.g. a light emitting diode) which directs a radial light beam f (Figure 2) on to a suitable detector.

The photocolorimeter can operate stepwise, bringing each cell in turn between the source and the detector and holding it there for the necessary time. Alternatively, the number of detectors can be equal to the number of cells, although the latter method is expensive. Still other methods may be used.

The following examples illustrate the invention:

EXAMPLE 1

A supply of filled rotors, i.e. with test reagent, were received from the manufacturer. These rotors were of the type described in Figures 3 and 4 of U.S. Patent 4,070,248, incorporated in its entirety herein by reference, and particularly at column 4, line 67 through column 6, line 31. The rotors were made from crystal polystyrene and were sized to contain one-tenth millilitre of liquid in each of pockets 13 for discharge into cells 15. The rotors were prepared with Eugon (a Difco product) broth for testing antibiotic susceptibility of various streptococcus species to various antibiotics including ampicillin, penicillin, nitrofurantoin, clindamycin, erythromycin, vancomycin, chloramphenicol and tetracycline.

Twenty three strains of Streptococci representing four species were tested by the standard Kirby/Baur and micro-broth dilution MIC tests, which results are recorded in the first two columns respectively of Table I below. Duplicate tests using rotors were then carried out and the results appear in the second two columns of Table I, the only difference being that polyvinylpyrrolidone was used in the tests reported in the fourth column.

Thus in the third column tests, suspensions of the microorganisms were prepared in distilled water to yield approximately $1.5 \times 10^8$ colony-forming units/milliliter and used as inoculum whereas in the fourth column tests, suspensions of the microorganisms were prepared in a 1% weight by volume solution of polyvinylpyrollidone in distilled water and used as inoculum. The polyvinylpyrrolidone solution was previously prepared by stirring 60 grams of polyvinylpyrrolidone having an average molecular weight of 360,000 (Aldrich Chemical Company Catalog No. 85-647-9) in 6 liters of distilled water, i.e. 1% weight by volume polyvinylpyrrolidone and then was sterilized by filtration.

The inoculum in each instance was introduced into central chamber 14, the closure means 11 inserted into proper position, and each rotor was placed on a centrifuge which was operated at a peak 3000 RPM for 15 seconds.

The rotors were then placed into an incubator for 18-24 hours and were read on an automatic photocolorimeter. Results are recorded as R= resistant to the drug, S=sensitive to the drug and I=intermediate response to the drug. The results shown in Table I indicate that the addition of polyvinylpyrrolidone to broth based susceptability tests results in a superior growth medium and the ease and reliability of the test is greatly increased.

TABLE I

| Organism | | Kirby/ Bauer | MIC | Without PVP | With PVP |
|---|---|---|---|---|---|
| **Clindamycin (cc)** | | | | | |
| 1014 | S. bovis | S | S | S | S |
| 1030 | S. faecalis | R | R | S | R |
| 1026 | S. faecalis | R | R | S | R |
| 1148 | S. durans | R | R | S | R |
| 1032 | S. faecalis | R | R | I | R |
| 1182 | S. faecalis | R | R | S | I |
| 1144 | S. faecum | R | R | S | R |
| 1044 | Enterococcus | R | R | S | R |
| 1073 | Enterococcus | R | R | R | R |
| 14 | Strep. strains | S | S | S | S |
| **Erythromycin (E)** | | | | | |
| 1073 | Enterococcus | R | R | S | R |
| 1040 | Enterococcus | S | I | S | I |
| 21 | Strep. strains | S | S | S | S |
| **Vancomycin (Va)** | | | | | |
| 23 | Strep. strains | S | S | S | S |
| **Chloramphenicol (C)** | | | | | |
| 23 | Strep. strains | S | S | S | S |
| **Tetracycline (Te)** | | | | | |
| 1014 | S. bovis | R | R | I | R |
| 1160 | S. durans | S | S | S | S |
| 1038 | S. faecalis | S | S | S | S |
| 1182 | S. faecalis | S | S | S | S |
| 19 | Strep. strains | R | R | S | R |

## TABLE I

contd.

| Organism | Kirby/ Bauer | MIC | Without PVP | With PVP |
|---|---|---|---|---|
| **Ampicillin (Am)** | | | | |
| 23   Strep. strains | S | S | S | S |
| | | | | |
| **Penicillin (P)** | | | | |
| 1026  S. faecalis | I | S | S | I |
| 1028  S. faecalis | I | S | S | I |
| 1032  S. faecalis | I | S | S | I |
| Remainder of the 20 strains behaved similarly. | | | | |
| | | | | |
| **Sulfamethoxazole-trimethoprim (SXT)** | | | | |
| 1148  S. durans | R | R | S | R |
| 1030  S. faecalis | R | R | S | R |
| 1160  S. durans | S | S | S | S |
| 1149  S. bovis | S | S | S | S |
| 19   Strep. strains | R | R | S | R |
| | | | | |
| **Nitrofurantoin (F/M)** | | | | |
| 23   Strep. strains | S | S | S | S |

Improved results have also been obtained with gram-negative and Staphylococcus microorganisms.

- 21 -

Although we do not wish to be bound by any theory as to the mechanism of action of the polyvinylpyrrolidone it appears that bacterial growth is enhanced or that suspension of the bacterial growth is enhanced, i.e. that adherence of the bacteria to the plastic or to each other was diminished. The phenomenon appears to be peculiar to polyvinylpyrrolidone since similar results were not obtained using TWEEN 20, TWEEN 80, potassium nitrate, collagen (a colloidal protein) or polyvinylchloride.

- 22 -

## EXAMPLE 2

Three hundred assembled but empty rotors, i.e. without test reagent, were received from the manufacturer. These rotors were of the type described in Figures 3 and 4 of U.S. Patent 4,070,248, incorporated in its entirety herein by reference, and particularly at column 4, line 67 through column 6, line 31. The rotors were made from crystal polystyrene and were sized to contain one-tenth millilitre of liquid in each of pockets 13. Two hundred of the rotors were selected at random from the shipment, the central chamber 14 of each filled with tap water, and closure means 11 was inserted into proper position in each. The rotor was placed on a centrifuge which was operated at a peak 3000 RPM for 15 seconds.

The rotor was then examined for even filling of the cells 15 in accordance with the following in which cells are designated wells.

"Failure is established as a visually measured, volume variance in excess of 20 per cent of the specified 0.1 ml fill volume. Measurement will be made by applying acetate overlay against well, and determining that liquid level is between two lines printed on the acetate at the 20 per cent limits. Well outline is also printed on acetate to insure accurate positioning. Liquid meniscus outside (above or below) printed lines in any well will establish rotor failure."

Of the 200 rotors so tested, 128 failed in that the liquid miniscus was outside the printed lines in an least one well.

The remaining one hundred rotors from the shipment were tested similarly except that the chamber 14 was filled in each instance with an aqueous solution prepared by stirring 60 grams of polyvinylpyrrolidone having an average molecular weight of 360,000 (Aldrich Chemical Company) Catalog No. 85-647-9) in 6 litres of tap water, i.e. 1% weight by

**0028463**

- 23 -

EXAMPLE 2

volume polyvinylpyrrolidone.  Of the 100 rotors so tested,
there were no failures.

Although we do not wish to be bound by any theory
as to the mechanism of action of the polyvinylpyrrolidone,
it appears that fluid flow is controlled to cause the
pockets 13 to fill more evenly without entrapment of air
bubbles.  Also, the polyvinylpyrrolidone appears to
facilitate fluid passage through restriction 16 into
cell 15 and to have a lubricating effect on closure means 11.

## CLAIMS

1. A method for the measuring and transferring predetermined volumes of a liquid sample, using a rotatable
device comprising a member defining an upwardly open
central chamber concentric with the rotational axis
of the device, a plurality of radial pockets communicating at inner ends thereof with the central chamber and
located to be filled by gravity flow of liquid from the
chamber into each of the pockets, the outer ends of
each of the pockets communicating by means of a
capillary constriction with each of a plurality of
test cells formed in the rotatable device;
comprising the steps of

   filling the central chamber with the liquid sample
until the pockets contain the predetermined volumes,

   inserting a closure means to isolate the predetermined
volumes of liquid in the pockets from the balance
of liquid in the chamber,

   rotating the device about the rotational axis to
create centrifugal forces sufficient to cause transfer
of the volumes from the pockets into the test cells
through the capillary constrictions,

   characterised in that the liquid sample comprises from
about 0.3 to 3.0% weight by volume of polyvinylpyrrolidone having an average molecular weight greater
than about 40,000 and less than about 400,000.

2. A method as claimed in Claim 1 in which some at
least of the test cells of the rotatable device
contain a bacteria growing medium and an antibiotic
in lyophilised form; the liquid sample contains
bacteria; and as an additional step after rotation
the bacteria are incubated so that the susceptibility
of the bacteria to antibiotic can be tested.

3. A method as claimed in Claim 1 in which some at least of the test cells contain a bacteria growing medium and growth indicator, in lyophylised or other dried form, the liquid sample contains bacteria and as an additional step after rotation the bacteria are incubated so that identification of the bacteria can be made.

4. A method for measuring and transferring predetermined volumes of a liquid sample using a rotatable device comprising a member defining an upwardly open central chamber concentric with the rotational axis of the device, a plurality of radial pockets having predetermined volume communicating at the inner ends thereof with the central chamber and located to be filled by gravity flow of liquid from the chamber into each of the pockets, the outer ends of each of the pockets communicating by means of a capillary restriction with each of a plurality of test cells formed in the rotatable device, some at least of the cells containing a bacterial growth medium and an antibiotic in lyophylised or other dried form, comprising the steps of:

filling the central chamber with the liquid sample until the pockets contain the predetermined volumes of liquid,

inserting a closure means to isolate the predetermined volumes of liquid in the pockets from the balance of liquid in the chamber,

rotating the device about the rotational axis to create centrifugal forces sufficient to cause transfer of the volumes from the pockets into the test cells through the capillary constrictions,

incubating the bacteria for a predetermined time period, and optically determining the growth bacteria in each cell to test susceptibility of bacterial to

antibiotic,

- 26 -

characterised in that the bacteria in said liquid
sample in said cells is incubated in the presence
of from about 0.3 to about 3.0% weight by volume
of polyvinylpyrrolidone having an average molecular
weight greater than about 40,000 and less than about
400,000.

5.    A method for measuring and transferring
predetermined volumes of a liquid
sample using a rotatable
device comprising a member defining an upwardly open
central chamber concentric with the rotational axis
of the device, a plurality of radial pockets having
predetermined volumes communicating at the inner ends
thereof with the central chamber and located to be
filled by gravity flow of liquid from the chamber into
each of the pockets, the outer ends of the pockets
communicating by means of a capillary restriction with
each of a plurality of test cells formed in the
rotatable device, some at least of said cells containing
a bacteria test medium and indicator in lyophylised or
other dried form,

comprising the steps of:

filling the central chamber with the liquid sample
until the pockets contain the predetermined volumes
of liquid,

inserting a closure means to isolate the predetermined
volumes of liquid in the pockets from the balance of
liquid in the chamber,

rotating the device about the rotational axis to
create centrifugal forces sufficient to cause transfer
of the volumes from the pockets into the test cells,

incubating the bacteria for a predetermined time period,
and optically determining the chemical change produced
by the bacteria in each cell to identify the bacteria characterised in that the bacteria are incubated in

- 27 -

the liquid sample in the cells in the presence of
from about 0.3 to about 3.0% weight by volume of
polyvinylpyrrolidone having an average molecular
weight greater than about 40,000 and less than about
400,000.

6.     A method according to any one of Claims 1 to 5 wherein
the average molecular weight of the polyvinylpyrrolidone is about 360,000 and its concentration in
the liquid sample is about 1%.

7.     A rotatable device comprising a member defining an
upwardly open central chamber concentric with the
rotational axis of the device, a plurality of radial
pockets communicating at inner ends thereof with the
central chamber and located to be filled by gravity
flow of liquid from the chamber into each of the
pockets, the outer ends of each of the pockets
communicating by means of a capillary constriction
with each of a plurality of test cells formed in the
rotatable device and a closure means adapted, when
inserted in the chamber, to isolate the predetermined
volumes of liquid in the pockets from the balance
of liquid in the chamber, characterised in that
each cell contains polyvinylpyrrolidone.

8.     A dispensable device for testing antibiotic susceptibility of bacteria in a liquid sample, comprising:

        a casing having an axis,
        an annular wall in said casing defining an
        upwardly open central chamber,

        a plurality of radial pockets formed in said
        casing communicating with said chamber via
        openings in said annular wall and angularly
        distributed about said chamber,

        a plurality of transparent test cells arranged
        in a circular row around said pockets,

- 28 -

means defining a capillary liquid flow restriction connecting each said test cell to a respective one of said pockets,

cover means arranged to substantially sealingly engage said annular wall of said chamber and to close said openings,

characterised in that each cell contains a test medium, at least one antibiotic, and polyvinylpyrrolidone.

9.    A dispensable device for testing bacteria in a liquid sample comprising:

a casing having an axis,

an annular wall in said casing defining an upwardly open central chamber,

a plurality of radial pockets formed in said casing communicating with said chamber via openings in said annular wall and angularly distributed about said chamber,

a plurality of transparent test cells arranged in a circular row around said pockets,

means defining a capillary liquid flow restriction connecting each said test cell to a respective one of said pockets,

cover means arranged to substantially sealingly engage said annular wall of said chamber and to close said openings,
characterised in that each said cell contains a bacterial test medium and polyvinylpyrrolidone.

10.    A device as claimed in any one of Claims 7 to 9 wherein the average molecular weight of the polyvinylpyrrolidone is greater than about 40,000 and less than about 400,000.

*Fig.1.*

*Fig.2.*

2

Fig.3.

*11ə*

*10ə*

*f*

*18ə*

*28ə*

*15ə*

*31*

*19b*

*21b*

*34*

*32*

*33*

*35*

*36*

*36*

*26b*

*16b*

*18b*

*15b*

Fig.4.

European Patent
Office

**EUROPEAN SEARCH REPORT**

Application number

EP 80 30 3528.6

| | DOCUMENTS CONSIDERED TO·BE RELEVANT | | CLASSIFICATION OF THE APPLICATION (Int Cl ³) |
|---|---|---|---|
| Category | Citation of document with indication, where appropriate, of relevant passages | Relevant to claim | |
| | DE - A1 - 2 714 232 (AMERICAN CYANAMID) <br> * claims 1 to 4; pages 5 to 6 * <br> -- | 1-10 | C 12 M 1/10 <br> G 01 N 1/18 |
| | DE - B2 - 2 608 601 (MILES LABORATO- RIES, INC.) <br> * claims 1, 6; column 4, lines 18 to 36 * <br> -- | 1-10 | |
| | AU - B - 472 420 (UNION CARBIDE CORP.) <br> * pages 5 to 7 * <br> -- | 1-10 | TECHNICAL FIELDS SEARCHED (Int. Cl.³) |
| D | US - A - 3 986 534 (J.M. SCHMIDT) <br> & FR - A1 - 2 280 895 <br> -- | 1-10 | |
| D | US - A - 4 070 248 (J.M. SCHMIDT) <br> ---- | 1-10 | C 12 M 1/00 <br> G 01 N 1/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 27-01-1981 | SCHWARTZ |

EPO Form 1503.1 06.78